(19) Europäisches Patentamt
European Patent Office
Office européen des brevets

(11) EP 3 221 781 B1

(12) FASCICULE DE BREVET EUROPEEN

(45) Date de publication et mention de la délivrance du brevet:
**17.08.2022 Bulletin 2022/33**

(21) Numéro de dépôt: **15805596.2**

(22) Date de dépôt: **19.11.2015**

(51) Classification Internationale des Brevets (IPC):
**G06F 3/0488** *(2022.01)*   **G06F 3/04812** *(2022.01)*
**G06F 3/042** *(2006.01)*   **B60K 37/06** *(2006.01)*
**G06F 3/041** *(2006.01)*

(52) Classification Coopérative des Brevets (CPC):
**B60K 37/06; G06F 3/0412; G06F 3/04812;**
**G06F 3/0488;** B60K 2370/1438; G06F 3/042;
G06F 2203/04101; G06F 2203/04108

(86) Numéro de dépôt international:
**PCT/FR2015/053126**

(87) Numéro de publication internationale:
**WO 2016/079433 (26.05.2016 Gazette 2016/21)**

(54) **INTERFACE GRAPHIQUE ET PROCEDE DE GESTION DE L'INTERFACE GRAPHIQUE LORS DE LA SELECTION TACTILE D'UN ELEMENT AFFICHE**

GRAFISCHE SCHNITTSTELLE UND VERFAHREN ZUR VERWALTUNG DER BESAGTEN GRAFISCHEN SCHNITTSTELLE WÄHREN DER BERÜHRUNGSAUSWAHL EINES ANGEZEIGTEN ELEMENTS

GRAPHICAL INTERFACE AND METHOD FOR MANAGING SAID GRAPHICAL INTERFACE DURING THE TOUCH-SELECTION OF A DISPLAYED ELEMENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **21.11.2014 FR 1461286**

(43) Date de publication de la demande:
**27.09.2017 Bulletin 2017/39**

(73) Titulaire: **Renault s.a.s**
**92100 Boulogne Billancourt (FR)**

(72) Inventeur: **REGNIER, Stéphane**
**91370 Verrieres Le Buisson (FR)**

(74) Mandataire: **Renault Group**
**Renault s.a.s.**
**API : TCR GRA 2 36**
**1, Avenue du Golf**
**78084 Guyancourt Cedex (FR)**

(56) Documents cités:
**EP-A2- 2 105 826        FR-A1- 3 002 052**
**US-A1- 2009 201 246      US-A1- 2011 157 040**
**US-A1- 2011 285 665      US-A1- 2012 120 002**
**US-A1- 2014 028 557**

Remarques:
Le dossier contient des informations techniques présentées postérieurement au dépôt de la demande et ne figurant pas dans le présent fascicule.

**Description**

L'invention a pour objet les interfaces tactiles, notamment les interfaces tactiles embarquées à bord de véhicules automobiles, ou les interfaces tactiles servant à piloter des systèmes sur lesquels un utilisateur intervient tout en étant contraint de maintenir son attention focalisée sur d'autres tâches, par exemple sur la surveillance d'une machine de production.

Dans de telles configurations, l'utilisateur doit interagir avec l'interface tactile tout en gardant son attention majoritairement disponible pour d'autres tâches que l'actionnement de l'interface, et, si l'interface n'est pas très grande, l'utilisateur peut éprouver des difficultés à sélectionner l'élément d'un menu. Pour sélectionner un tel élément d'un menu, il doit appliquer son doigt à un endroit donné de l'interface correspondant à une zone de sélection tactile de l'élément de menu, mise en évidence sur l'écran par une icône ou plus généralement un symbole graphique affiché sur l'écran sensiblement à l'endroit de la zone de sélection tactile. En particulier, dans un véhicule automobile, lorsque le véhicule est en mouvement les gestes de sélection de l'utilisateur, qui doit constamment surveiller la route, peuvent être imprécis.

Afin de pallier ces inconvénients, certains fabricants de terminaux mobiles ont développé des écrans de grande taille ou des systèmes de saisie de texte, dans lesquels par exemple on grossit graphiquement une lettre touchée par le doigt. Cet affichage grossi, déporté à distance de l'endroit où se trouvent alors l'icône à activer et le doigt, est maintenu pendant une brève durée de temps, suffisamment longue cependant pour que l'utilisateur lise la lettre qu'il a saisie, effectuant ainsi un contrôle visuel pour vérifier qu'il a effectué la saisie qu'il souhaitait. Ce type d'affichage impose toujours d'effectuer la saisie sur une zone restreinte et différente de l'écran à chaque nouvelle lettre. La demande de brevet US2009201246 A1 décrit une méthode d'ajustement d'un écran d'affichage d'un dispositif électronique, destinée à faciliter la vue et la sélection d'icônes de l'écran lorsque le dispositif subit des instabilités telles que des vibrations. En particulier, US2009201246 A1 propose des compensations de mouvement pour des écrans notamment tactiles. Ainsi, les régions d'entrée (zone de sélection liée à un objet graphique) à compensation de mouvement sont divulguées, et il s'agit de rendre plus facile la sélection sur un écran quand le moyen de contact ou d'approche vers l'écran, tel que le doigt, vibre. La zone de sélection de l'image graphique est alors bougée en accord avec les vibrations perçues. Pour ce faire, le circuit détecte des changements de capacitance générés par les moyens de contact ou d'approche vers l'écran, tels qu'un doigt. Pour qu'il y ait une compensation de mouvement associée à une région d'entrée il faut que le mouvement perçu soit dans des limites données. Plusieurs régions d'entrées peuvent bouger simultanément ou indépendamment, et ce type de mouvement peut être combiné avec d'autres types de compensation de mouvement qui sont fonction du mouvement de l'écran en tant que tel (dans un environnement soumis à des vibrations notamment), mais peut aussi être inhibable. Le document US20111285665 A1 décrit un dispositif comprenant un panneau d'affichage sur lequel sont affichés plusieurs icônes, capable de détecter l'approche d'un doigt par détection d'une variation de capacité. Le document US 2012120002 A1 décrit un dispositif à écran tactile capable d'identifier un point cible correspondant à un point de contact entre la trajectoire d'un stylet et l'écran, l'interface étant configurée pour effectuer une action au niveau de ce point, telle que le déplacement d'un curseur. Les documents FFR3002052 AI,

EP2105826 A2 et US2014028557 A1 constituent d'autres arts antérieurs pertinents. US 2011/157040 A1 décrit une interface tactile et une méthode d'ajustement d'éléments graphiques d'un écran d'affichage d'un dispositif électronique, où l'élément graphique visé par un doigt dont le point d'ancrage est le plus proche du point d'impact est mis en valeur, de manière à faciliter la vue et la sélection d'une icône de l'écran.

L'invention a pour but de proposer un système d'interface homme/machine permettant de diminuer les occurrences d'erreur de saisie des éléments d'un menu, en facilitant la saisie de l'élément graphique souhaitée par l'utilisateur, sans nécessairement augmenter la taille de l'écran, et en laissant davantage de marge dans les gestes à effectuer pour effectuer la saisie.

La revendication 1 définit l'interface tactile de l'invention et la revendication 10 le procédé correspondant.

On désigne ici par « écran » de l'interface tactile, ou interface graphique, trois régions d'espace à deux dimensions qui sont superposables les unes aux autres, moyennant un éventuel calcul de changement de coordonnées géré par une unité de commande électronique gérant les opérations de détection effectuées par l'interface tactile ainsi que les affichages sur l'écran de l'interface tactile.

La première de ces trois régions est constituée par l'écran d'affichage à proprement parler, permettant d'afficher les éléments graphiques à l'attention de l'utilisateur pour lui indiquer les régions de l'espace avec lesquelles il doit interagir.

La deuxième région est une unité de détection de l'interface tactile ou interface graphique, associée à une surface plane sensible de type écran tactile, superposée à l'écran d'affichage, ou associée à un autre système de détection dans l'espace permettant notamment de détecter la position du doigt de l'utilisateur au voisinage de l'écran d'affichage, alors repéré dans les coordonnées propres de l'interface de détection.

La troisième région est définie par des valeurs de coordonnées de points d'un écran virtuel de référence, mémorisées par l'unité de commande électronique et groupés par régions de l'écran virtuel, exprimées dans un système de coordonnées propre à l'unité de commande électronique. Ces régions de l'écran virtuel sont par exemple définies par des zones surfaciques ou par des ensembles de lignes frontières. Par rapport à ces régions, sont mémorisés les points d'ancrage initiaux des éléments graphiques, puis calculés leurs points de centrage ultérieurs, et sont également calculées à chaque instant les coordonnées des autres points de chaque élément graphique qui peuvent ensuite être traduites dans le système de coordonnées de l'écran d'affichage. La position du doigt dans les coordonnées de l'interface de détection peut être par exemple traduite dans le système de coordonnées de l'unité de commande électronique pour identifier sa position par rapport aux différents frontières, puis pour calculer au cours du temps les positions des points de centrage des éléments graphiques affichés, qui sont ensuite traduites en positions sur l'écran d'affichage.

L'élément graphique et la zone de sélection tactile entourent initialement tous deux le point d'ancrage, mais peuvent ne plus entourer ce point d'ancrage une fois déplacés. La position du point d'ancrage de l'élément graphique reste fixe pendant l'affichage d'un menu de sélection donné au cours de l'interaction entre le doigt et l'interface, jusqu'à ce qu'éventuellement un contact du doigt sur l'écran déclenche l'affichage d'un autre menu de sélection.

Le doigt de l'opérateur peut être remplacé de manière équivalente par un élément détectable par l'interface, par exemple un objet allongé, tel un stylet, adapté pour permettre la détection d'un point géométrique particulier par l'interface tactile.

Le point d'ancrage de l'élément graphique est un point particulier de l'écran associé à cet élément graphique, de préférence contenu à l'intérieur des frontières de l'élément graphique pour un état d'affichage de référence de l'interface, correspondant par exemple à l'affichage d'un menu de sélection particulier en absence d'interaction en cours avec le doigt.

L'élément graphique peut être un motif d'affichage surfacique ou linéique, comportant une ou plusieurs couleurs. De préférence l'élément graphique définit un contour ou une surface visible sur l'écran et coïncidant avec les contours ou la surface de la zone de sélection tactile associée.

Le point d'ancrage peut être typiquement un barycentre géométrique d'une surface ou d'un contour définissant les frontières visibles de l'élément graphique dans sa position d'affichage en absence d'interactions. Selon certaines variantes de réalisation, le point d'ancrage de l'élément graphique peut être excentré par rapport à l'élément graphique, par exemple peut être déporté vers un bord de l'écran dont l'élément graphique est le plus proche, afin de limiter les risques de chevauchement entre l'élément graphique déplacé et le bord de l'écran.

Suivant des variantes de réalisation, le seuil de distance peut être le même dans toutes les directions autour du point d'ancrage. Selon une autre variante de réalisation, le seuil de distance peut être fonction de la position angulaire du point d'impact autour du point d'ancrage, de manière à définir une frontière non circulaire à l'intérieur de laquelle la détection du point d'impact déclenche un déplacement de l'élément graphique. Une fonction spécifique peut être alors associée à chaque élément graphique de l'interface. L'affichage de l'élément graphique translaté à un moment donné se substitue de préférence à l'affichage initial de l'élément graphique et aux autres affichages précédents, s'il y en a, de l'élément graphique.

L'interface peut être configurée pour, lors du franchissement du premier seuil, calculer un vecteur de translation du point d'ancrage vers un point de centrage temporaire, et pour effectuer une translation correspondante de l'affichage de l'élément graphique. Par point de centrage temporaire, on entend un point de l'écran sur lequel est centré l'élément graphique pendant au moins certaines phases d'interaction de l'interface avec le doigt. Le centrage s'entend ici au sens large du terme, le point de centrage pouvant être par exemple un barycentre surfacique, ou un barycentre de certains points caractéristiques de l'élément graphique, les coefficients de pondérations de ce barycentre étant constants mais pas forcément égaux d'un point caractéristique à l'autre. La représentation de l'élément graphique autour du point de centrage temporaire peut être alors une translation, une homothétie, ou peut être une dilatation bidirectionnelle de la représentation initiale de l'élément graphique autour de son point d'ancrage. Dans un mode de réalisation préféré, ce point d'ancrage et le point de centrage temporaire ne sont pas apparents sur l'élément graphique affiché. Le rapport de l'homothétie ou les rapports de la dilatation sont de préférence supérieurs ou égaux à 1 dès que le point de centrage ne coïncide plus avec le point d'ancrage initial. Le point de centrage temporaire est situé sur une ligne entre le point d'ancrage et le point d'impact.

Le premier seuil de distance peut être une fonction variable d'une position angulaire du point d'impact autour du point d'ancrage. Autrement dit, le seuil de distance définit une frontière non circulaire autour du point d'ancrage, cette frontière délimitant un domaine d'influence à l'intérieur duquel l'interface est configurée pour activer le déplacement de l'affichage de l'élément graphique.

L'interface peut être configurée pour calculer la position du point de centrage temporaire comme un barycentre entre le point d'ancrage initial et le point d'impact, la distance relative entre le point de centrage et le point d'impact étant une fonction croissante de la distance entre le doigt et l'écran. On entend ici par barycentre un barycentre pondéré entre deux points avec des coefficients de pondération qui peuvent être des fonctions variables, par exemple une fonction de la distance entre le doigt et l'écran. Selon une autre variante de réalisation, la distance relative entre le point de centrage et le point d'impact est une fonction croissante de la distance entre le doigt et le point d'impact. De préférence, cette fonction s'annule quand le doigt touche l'écran. On appelle ici distance relative ou distance relative d'approche, le rapport entre le déplacement appliqué au point de centrage, et la distance entre le point d'ancrage et le point d'impact. Selon une première variante de réalisation, cette distance relative d'approche ne dépend pas de la distance entre le point d'impact et le point d'ancrage. Selon une autre variante de réalisation, cette distance relative peut être décroissante avec la distance entre le point d'impact et le point d'ancrage, par exemple si l'élément graphique est de taille réduite devant la distance séparant deux éléments graphiques. Ainsi le doigt peut se retrouver positionné au dessus de l'élément graphique même quand celui ci s'est déporté à proximité de la zone d'influence -définie plus loin- d'un autre élément graphique. Selon une autre variante de réalisation, cette distance relative peut être croissante avec la distance entre le point d'impact et le point d'ancrage, par exemple si l'élément graphique est de taille comparable à la distance séparant deux éléments graphiques. On évite ainsi que l'élément graphique « déplacé » empiète outre mesure sur les zones d'influence d'éléments graphiques voisins. Selon encore un autre mode de réalisation, cette distance relative d'approche peut en outre, comme le premier seuil de distance, être une fonction variable d'une position angulaire du point d'impact autour du point d'ancrage.

L'interface peut être configurée pour, lors du franchissement du premier seuil, afficher l'élément graphique translaté en dilatant cet élément graphique, suivant au moins une direction, selon un facteur de grossissement. La dilatation peut correspondre à une homothétie bidirectionnelle, mais peut, dans certaines variantes de réalisation, correspondre à une dilatation présentant deux rapports différents selon deux axes perpendiculaires de l'écran. La dilatation peut correspondre à une dilatation unidirectionnelle. Par exemple si l'élément graphique se trouve près d'un bord d'affichage l'écran, l'élément graphique peut être dilaté davantage, ou dilaté uniquement selon la direction perpendiculaire à ce bord, afin de retarder le moment où l'élément graphique vient chevaucher le bord de l'écran si le doigt se rapproche de ce bord. Le facteur de grossissement, c'est-à-dire le rapport de l'homothétie ou le rapport le plus élevé de la dilatation bidirectionnelle, est de préférence compris entre 1,1 et 1,5, et de préférence compris entre 1,15 et 1,35. L'élément graphique peut alternativement, ou en complément du changement de dimension, être mis en exergue par un changement de brillance, de contraste, de couleur, de motif de remplissage.

Avantageusement, l'interface peut être configurée pour, lors du franchissement du premier seuil, afficher l'élément graphique translaté à la nouvelle position correspondant au franchissement du seuil, puis, quand la distance entre le point d'ancrage et le point d'impact devient inférieure au premier seuil, calculer périodiquement un nouveau vecteur de translation prenant en compte à chaque fois un point d'impact actualisé, et pour afficher l'élément graphique translaté du vecteur correspondant. Selon un premier mode de réalisation, la taille de l'élément graphique affiché reste constante tant que le point de centrage diffère du point d'ancrage. Selon un autre mode de réalisation l'interface peut être configurée pour ensuite ramener la taille de l'élément graphique à une taille intermédiaire entre sa taille initiale et sa taille au moment du franchissement du premier seuil de distance. Selon encore d'autres modes de réalisation, l'interface peut être configurée pour continuer à augmenter la taille de l'élément graphique une fois le seuil franchi.

L'interface est configurée pour déplacer avec l'élément graphique affiché, la zone prise en compte comme zone de sélection tactile.

Le déplacement se fait selon le même vecteur reliant le point d'ancrage au point de centrage temporaire. Si l'élément graphique est affiché dilaté par un ou par des facteurs de grossissement, la zone de sélection tactile est dilatée du/des mêmes facteurs de grossissement.

L'interface peut être configurée pour, quand la distance entre le point d'ancrage et le point d'impact devient supérieure à un second seuil, ramener l'affichage de l'élément graphique à sa position initiale autour du point d'ancrage. Le second seuil peut être identique au premier seuil. L'affichage de l'élément graphique revient également à sa taille et à son aspect (brillance, couleur, effet graphique de relief...) initial avant le franchissement du premier seuil de distance. Selon une variante de réalisation, le retour à l'affichage d'origine peut être effectué seulement si le dépassement du premier seuil se prolonge au-delà d'un seuil de temporisation. Selon les variantes de réalisation, à partir de l'instant de son déclenchement, le retour à l'affichage d'origine peut être effectué sans transition, ou peut être effectué en affichant l'élément graphique à une suite de position, et avec une suite de tailles intermédiaires, entre la position initiale et la dernière position avant le déclanchement du retour. La trajectoire de retour peut se faire par exemple en ligne droite, avec une décroissance progressive de la taille de l'élément graphique entre sa taille lors du déclenchement du retour, et sa taille initiale hors interactions avec le doigt. Selon une autre variante de réalisation, la taille de l'élément graphique peut être ramenée à sa taille initiale dès l'amorce du retour de l'élément graphique vers sa position d'origine.

Selon un mode de réalisation particulier, l'interface peut être configurée pour afficher sur l'écran tactile, au moins un premier élément graphique associé à une première zone de sélection tactile, à un premier point d'ancrage, à une première fonction de premier seuil de distance et pour afficher au moins un second élément graphique associé à une seconde zone de sélection tactile, à un second point d'ancrage et à une seconde fonction de premier seuil de distance. La première et la seconde fonction de premier seuil de distance définissent autour du premier et du second point d'ancrage, respectivement une première frontière d'un premier domaine d'influence et une seconde frontière d'un second domaine d'influence. L'interface peut être alors configurée pour autoriser, au moins par moments, une sélection par contact du doigt en un point de contact dans la première zone de sélection tactile, alors que la première zone de sélection tactile chevauche temporairement le second domaine d'influence et que le point de contact se trouve dans le second domaine d'influence.

L'invention propose le procédé de gestion d'une interface tactile tel que définit dans la revendication 10.

Par convention, on mesure la distance entre le point d'impact et l'élément graphique, comme la distance entre le point d'impact et un point de centrage obtenu en appliquant au point de centrage initial, le vecteur de translation de l'élément graphique.

La relation entre la proximité du doigt à l'écran et la proximité entre le point d'impact et l'équivalent déplacé du point d'ancrage n'est pas forcément linéaire.

D'autres buts, caractéristiques et avantages de l'invention apparaîtront à la lecture de la description suivante, donnée uniquement à titre d'exemple non limitatif, et faite en référence aux dessins annexés, sur lesquels :

- la figure 1 illustre un véhicule automobile équipé d'une interface selon l'invention,
- la figure 2 illustre une interface homme-machine selon l'invention, et
- la figure 3 est un graphe caractéristique d'un des modes de fonctionnement de l'interface de la figure 2.

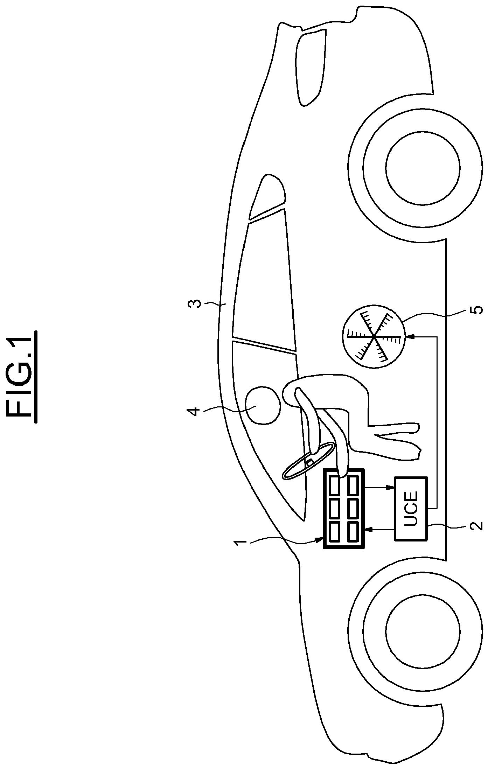

Tel qu'illustré sur la figure 1, une interface tactile selon l'invention peut être par exemple embarquée à bord d'un véhicule automobile 3 piloté par un utilisateur 4 qui, en déplaçant son doigt et en touchant certains points d'un écran d'une interface tactile 1 est ainsi à même d'émettre des consignes à une unité de commande électronique 2 permettant d'actionner différents équipements du véhicule, par exemple un système d'aération 5 du véhicule ou tout autre équipement du véhicule.

L'unité de commande électronique 2 peut également renvoyer vers l'interface tactile des messages traduisant l'état de fonctionnement du véhicule afin que l'utilisateur 4 du véhicule puisse prendre en compte ces données.

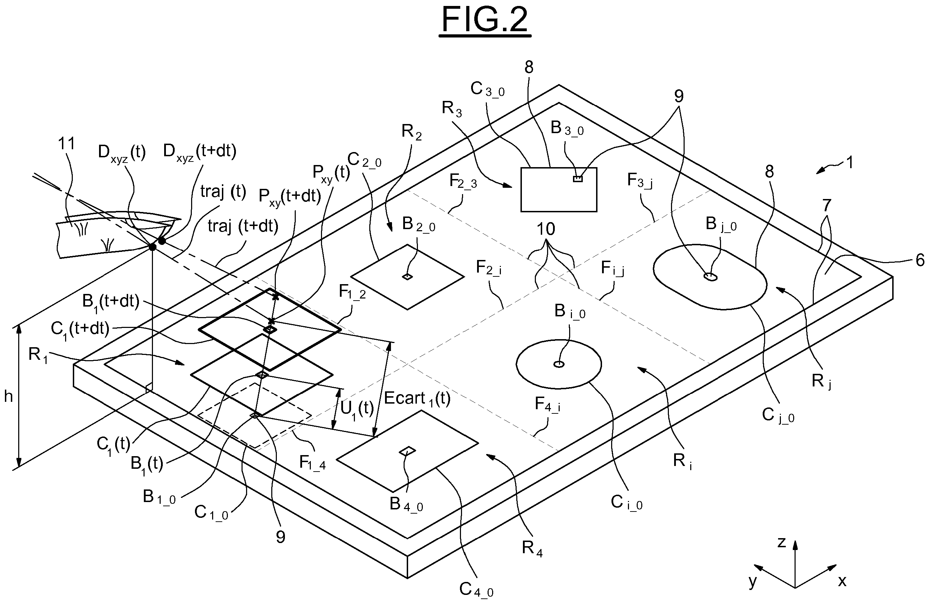

La figure 2 illustre le principe de fonctionnement d'une interface tactile 1 selon l'invention. L'interface tactile 1 comprend typiquement un écran tactile 6, délimité par des bords 7 et un système de détection (non représenté) permettant de détecter la position d'un doigt 11 d'un utilisateur notamment d'un point particulier $D_{xyz}$ de ce doigt, et permettant de détecter si ce doigt se trouve ou non en contact avec l'écran tactile. Par écran tactile on désigne ici tout système de saisie par déplacement d'un doigt et par approche de ce doigt d'une surface de validation. L'invention peut par exemple s'appliquer à des systèmes de détection projetant de manière optique des informations sur une surface inerte et observant le volume voisin de cette surface au moyen de capteurs divers optiques ou infrarouges par exemple, de manière à détecter la position d'un doigt et de manière à détecter si le doigt est ou non en contact avec la surface.

L'écran tactile 6 est délimité au moyen de frontières 10 désignées ici par $F_{1\_4}$, $F_{1\_2}$, $F_{4\_i}$, $F_{2\_i}$, $F_{2\_3}$, $F_{i\_j}$ en régions ou zones d'influence, qui sont sur la figure 2 référencées $R_1$, $R_2$, $R_3$, $R_4$, Ri et $R_j$. Chaque région correspond à une zone de sélection d'un menu affiché sur l'écran tactile. Les régions susceptibles de donner lieu à un acte de validation affichent chacune un élément graphique référencé ici 8 et plus particulièrement référencé suivant les régions $C_{1\_0}$, $C_{2\_0}$, $C_{3\_0}$, $C_{4\_0}$, $C_{i\_0}$, $C_{j\_0}$.

Ces éléments graphiques indicés en 0 correspondent à un affichage initial du menu sur l'écran graphique. L'interface graphique est configurée pour détecter le mouvement du doigt 11 et en particulier d'une extrémité $D_{xyz}$ de ce doigt qui à un instant t se trouve au point $D_{xyz}(t)$ et à l'instant suivant t+dt se trouve en un point $D_{xyz}(t+dt)$.

L'interface graphique est apte à déterminer, par exemple par extrapolation des points successifs détectés, une trajectoire qui est réestimée à chaque instant et qui est notée traj(t) sur la figure 2 pour la trajectoire estimée à l'instant t, et qui est notée traj(t+dt) pour la trajectoire estimée à l'instant t+dt. Chacune de ces trajectoires calculées définit un point $P_{xy}$ que l'on désigne ici par point d'impact, bien que l'impact reste d'abord théorique. Ce point $P_{xy}$ est l'intersection de la trajectoire et d'une surface de contact de l'écran qui peut coïncider avec la surface d'affichage de l'écran 6.

L'invention propose, lorsque le point d'impact se trouve suffisamment près d'un des éléments graphiques, de modifier l'affichage de l'élément graphique et de le rapprocher du point d'impact, afin de faciliter le travail de l'utilisateur qui peut ainsi continuer à valider l'option correspondante du menu sans déporter son doigt de la trajectoire en cours. Pour ce faire, on définit arbitrairement pour chaque élément graphique un point d'ancrage virtuel 9, qui peut ne pas apparaître à l'affichage, et qui sert à la fois pour estimer la distance entre l'élément graphique et le point d'impact et pour calculer les déplacements ultérieurs de l'affichage de l'élément graphique.

Sur la figure 2, ces points d'ancrage sont repérés respectivement par les références $B_{1\_0}$, pour l'élément graphique $C_{1\_0}$, $B_{2\_0}$ pour l'élément graphique $C_{2\_0}$, ..$B_{j\_0}$ pour l'élément graphique $C_{j\_0}$.

Ces points d'ancrage peuvent par commodité correspondre à un barycentre surfacique de l'élément graphique, ou à un barycentre d'un contour de l'élément graphique. Selon une variante de réalisation, ils peuvent éventuellement être situés de manière arbitraire près d'une des frontières de l'élément graphique.

Pour déterminer si l'affichage de l'élément graphique $C_{1\_0}$ de la région $R_1$, doit être déplacé, la distance notée ici $écart_1(t)$, peut être comparée soit à un seuil constant, soit à un seuil qui dépend de la direction de la droite reliant le point de centrage $B_{1\_0}$ et le point d'impact $P_{xy}(t)$. Par exemple on peut vérifier si le point d'impact se trouve à l'intérieur des frontières délimitant la région dans laquelle se trouve l'élément graphique considéré dans son état initial en l'absence d'interaction avec le doigt.

Sur la figure 2, la distance à un instant t, du point d'impact $P_{xy}(t)$ de la trajectoire traj(t) calculée à cet instant t, et du point d'ancrage $B_{1\_0}$ est notée $Ecart_1(t)$. En fonction de cette distance, et également en fonction de la distance du doigt à l'écran, on applique à l'élément graphique $C_{1\_0}$ un déplacement noté ici $U_1(t)$, qui à un instant donné correspond à un vecteur joignant le point d'ancrage $B_{1\_0}$ et un point de centrage temporaire $B_1(t)$ occupant par rapport à l'élément graphique déplacé $C_1(t)$ la même position barycentrique que le point d'ancrage $B_{1\_0}$ occupe initialement par rapport à l'élément graphique $C_{1\_0}$ dans sa configuration initiale d'affichage.

A un instant ultérieur t+dt, la trajectoire re-calculée définit un nouveau point d'impact $P_{xy}(t+dt)$ dont la position est utilisée conjointement avec la distance du doigt à l'écran pour calculer une nouvelle position du point de centrage $B_1(t+dt)$ de l'élément graphique $C_1(t+dt)$ affiché à ce moment-là.

Afin d'améliorer la perception par l'utilisateur de l'élément graphique qui est sur le point d'être sélectionné, on peut, dès que le déplacement de l'affichage de l'élément graphique est activé, accompagner ce déplacement d'une dilatation des dimensions de l'élément graphique, par exemple une homothétie suivant toutes les directions ou éventuellement, suivant l'espace disponible à l'écran, une dilatation suivant une des directions de l'écran.

La taille de l'élément graphique peut ensuite être maintenue constante tant que le déplacement de l'affichage de l'élément graphique continue d'être effectif. Suivant la taille de l'élément graphique et l'amplitude du déplacement, il peut arriver que l'élément graphique chevauche une des frontières entre régions. Par exemple sur la figure 2, l'élément graphique $C_1(t+dt)$ est sur le point de chevaucher la frontière $F_{1\_2}$. A chaque élément graphique est associée une zone de sélection tactile, qui lorsqu'elle est touchée par le doigt de l'utilisateur déclenche une action correspondant à l'une des options du menu affiché sur l'écran. De préférence, la zone de sélection tactile coïncide avec la surface occupée par l'élément graphique.

L'interface selon l'invention peut être configurée de sorte que, si suite à la trajectoire effectuée par le doigt, l'élément graphique et la zone de sélection tactile associée chevauchent une des frontières et que le doigt arrive en contact avec l'écran en un point de l'élément graphique affiché à cet instant, une validation sur la zone de sélection tactile associée est alors prise en compte, même si le point de contact se trouve à cet instant au-delà de la frontière de la région associée à l'élément graphique.

De cette manière, on facilite la saisie de l'utilisateur, puisqu'en quelque sorte la frontière effective de la région admise pour sélectionner un élément du menu se déforme dans une certaine mesure en fonction de la trajectoire du doigt de l'utilisateur, de manière à élargir la région totale de sélection admise en déplaçant temporairement ses frontières.

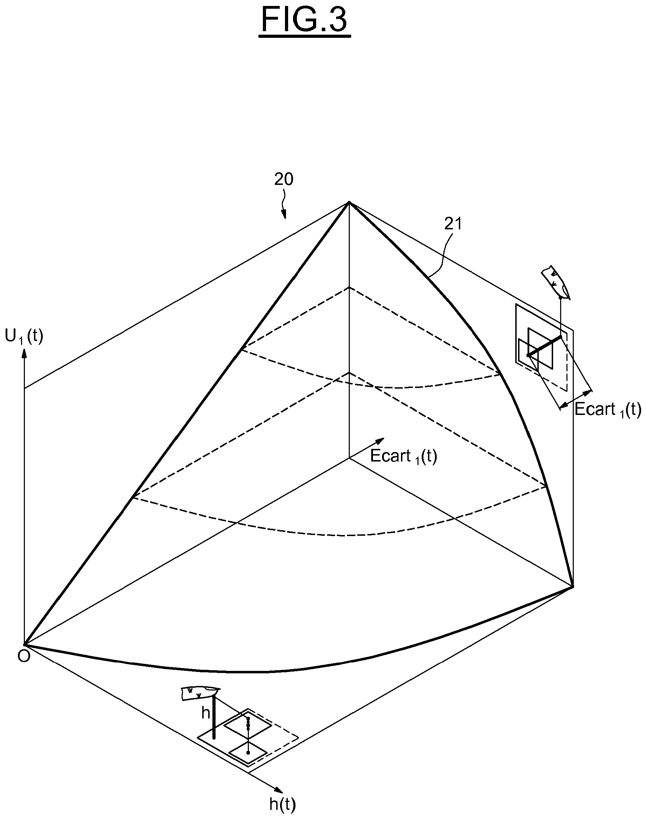

La figure 3 illustre un exemple de graphique 20 reliant l'amplitude du déplacement ici noté $U_1(t)$ d'un élément graphique sur une interface selon l'invention, en fonction d'une distance h(t) entre un doigt de l'utilisateur et l'écran, et d'une distance $Ecart_1(t)$ entre le point d'impact de la trajectoire du doigt et le point d'ancrage initial de l'élément graphique. La surface 21 cartographiée est ici choisie pour annuler tout déplacement de l'élément graphique quand la distance du doigt à l'écran dépasse un certain seuil ho, qui peut typiquement être la distance seuil de détection de l'interface tactile. La surface 21 cartographiée est aussi choisie pour annuler tout déplacement de l'élément graphique lorsque le point d'impact se rapproche du point d'ancrage, puisqu'il n'y a plus lieu alors de déplacer l'élément graphique. Typiquement, la valeur $U_1(t)$ de déplacement peut être choisie comme un produit entre la distance $Ecart_1(t)$ et une fonction qui est choisie comme une fonction croissante de la distance du doigt à l'écran, fonction qui s'annule pour une valeur seuil $h_0$ de distance. Une des formes de fonctions possibles pour définir le vecteur de déplacement $U_1(t)$ est de multiplier directement la distance $Ecart_1(t)$ par une fonction concave ou convexe de la distance h du doigt à l'écran. Cette fonction concave ou convexe peut être par exemple une puissance de la différence à 1, d'un rapport entre la distance h du doigt et la distance seuil ho.

Si on choisit pour cette fonction une puissance ½, on obtient l'expression proposée à l'équation (1) et correspondant au graphique de la figure 3 :

$$U_1(t) = Dist\big(B_{1\_0}, P_{xy}(t)\big) \times \sqrt{(1 - h(t)/h_0)} = Ecart_1(t) \times \sqrt{(1 - h(t)\ /h_0)}$$

Equation (1)

L'avantage de choisir une telle forme de fonction convexe est que l'on a un effet de « ralentissement » du déplacement de l'élément graphique quand le doigt est au voisinage immédiat de l'écran, ce qui évite de perturber l'utilisateur avant la sélection finale. On peut envisager une autre variante de fonction U(t) dans laquelle on applique également une fonction puissance à la distance $Ecart_1(t)$ entre le point d'ancrage et le point d'impact, de manière par exemple à ralentir le déplacement de l'élément graphique quand on approche des bornes de la région associée à l'élément graphique considéré. La distance du doigt à l'écran peut être prise comme une distance orthogonale h du doigt à l'écran, comme représenté sur les figures 2 et 3, mais on peut envisager des variantes de réalisation dans lesquelles la distance du doigt à l'écran est prise comme la distance entre le point $D_{xyz}$ du doigt le plus proche de l'écran et le point d'impact $P_{xy}(t)$ de la trajectoire à cet instant.

En se plaçant d'un autre point de vue, on peut définir une distance relative entre le point de centrage $B_1(t)$ de l'élément graphique, et le point d'impact $P_{xy}(t)$ comme un rapport de distance $\Delta_1(t)$, défini comme :

$$\Delta_1(t) = \frac{Ecart_1(t) - U_1(t)}{Ecart_1(t)}$$

Equation (2).

Cette distance relative donne l'écart restant à parcourir à l'élément graphique pour que cet élément graphique se retrouve centré sur le point d'impact.

Cette distance relative diminue quand le doigt approche de l'écran et s'annule quand le doigt touche l'écran.

L'invention ne se limite pas aux exemples de réalisation décrits et peut se décliner en de nombreuses variantes. La position du doigt par rapport à l'interface peut être détectée par tout moyen tactile ou tout moyen de sélection par positionnement de l'extrémité d'un doigt. Les fonctions permettant de calculer le déplacement d'un élément graphique peuvent différer de celles citées dans les exemples. Des temporisations peuvent être introduites à certaines étapes du processus d'affichage modifié du ou des éléments graphiques. Des modes d'affichage en transparence d'un élément graphique par rapport à un autre peuvent être prévus si deux éléments graphiques doivent être affichés sur des zones s'interceptant.

**Revendications**

1. Interface tactile (1) comportant un écran d'affichage (6), l'interface tactile (1) étant apte à détecter l'approche et la position d'un doigt (11) d'un utilisateur par rapport à l'écran d'affichage, l'interface tactile étant configurée pour afficher sur l'écran d'affichage (6) au moins un élément graphique (8, $C_{1\_0}$, $C_{2\_0}$, $C_{3\_0}$, $C_{4\_0}$, $C_{i\_0}$, $Cj_{1\_0}$) associé à une zone de sélection tactile, entourant un point d'ancrage (9, $B_{1\_0}$, $B2_{1\_0}$, $B_{3\_0}$, $B_{4\_0}$, $B_{i\_0}$, $Bj_{1\_0}$) de l'élément graphique sur l'écran d'affichage, et se trouvant à l'intérieur d'une même zone d'influence (R1, R2, R3, R4, Ri et Rj), l'écran tactile (6) étant délimité au moyen de frontières (10, F1_4, F1_2, F4_i, F2_i, F2_3, Fi_j) en zones d'influence (R1, R2, R3, R4, Ri et Rj), **caractérisée en ce que** l'interface tactile (1) est configurée pour estimer de manière répétée une trajectoire (traj(t)) d'un point ($D_{xyz}(t)$) du doigt (11) et un point d'impact ($P_{xy}(t)$) de cette trajectoire sur l'écran d'affichage (6), et est configurée pour, quand le point d'impact (Pxy(t)) entre dans la zone d'influence et lorsqu'une distance ($Ecart_1(t)$) entre le point d'ancrage ($B_{1\_0}$) et le point d'impact ($P_{xy}(t)$) devient inférieure à un premier seuil, déplacer l'élément graphique affiché ($C_1(t)$) et la zone de sélection tactile associée en direction du point d'impact ($P_{xy}(t)$), et est configurée pour, tant que le point d'impact ($P_{xy}(t)$) reste dans la zone d'influence (R1, R2, R3, R4, Ri et Rj), afficher l'élément graphique ($C_1(t)$) et la zone de sélection tactile associée, en une position qui est fonction du point d'impact actualisé ($P_{xy}^{(t+dt)}$) et qui est d'autant plus proche du point d'impact que le doigt (11) s'approche de l'écran d'affichage (6).

2. Interface tactile selon la revendication 1, configurée pour, lors du franchissement du premier seuil, calculer un vecteur de translation ($U_1(t)$) du point d'ancrage ($B_{1\_0}$) vers un point de centrage temporaire ($B_1(t)$), et pour effectuer une translation correspondante de l'affichage ($C_1(t)$) de l'élément graphique.

3. Interface tactile selon la revendication 2, dans lequel le premier seuil de distance est une fonction variable d'une position angulaire du point d'impact ($P_{xy}(t)$) autour du point d'ancrage ($B_{1\_0}$).

4. Interface tactile selon l'une des revendications 2 ou 3, configurée pour calculer la position du point de centrage temporaire ($B_1(t)$) comme un barycentre entre le point d'ancrage ($B_{1\_0}$) et le point d'impact ($P_{xy}(t)$), la distance relative entre le point de centrage et le point d'impact ($P_{xy}(t)$) étant une fonction croissante de la distance entre le doigt et l'écran d'affichage.

5. Interface tactile selon l'une des revendications 2 à 4, configurée pour, lors du franchissement du premier seuil, afficher l'élément graphique translaté ($C_1(t)$) en dilatant cet élément graphique, suivant au moins une direction, selon un facteur de grossissement.

6. Interface tactile selon l'une quelconque des revendications 2 à 5, configurée pour, lors du franchissement du premier seuil, afficher l'élément graphique translaté ($C_1(t)$) à la nouvelle position correspondant au franchissement du seuil, puis, quand la distance entre le point d'ancrage et le point d'impact devient inférieure au premier seuil, calculer périodiquement un nouveau vecteur de translation ($U_1(t)$) prenant en compte à chaque fois un point d'impact ($P_{xy}(t)$) actualisé, et pour afficher l'élément graphique ($C_1(t)$) translaté du vecteur ($U_1(t)$) correspondant.

7. Interface tactile selon l'une quelconque des revendications précédentes, configurée pour déplacer avec l'élément graphique affiché ($C_1(t)$), la zone de sélection tactile.

8. Interface tactile selon l'une quelconque des revendications précédentes, configurée pour, quand la distance ($Ecart_1(t)$) entre le point d'ancrage ($B_{1\_0}$) et le point d'impact ($P_{xy}(t)$) devient supérieure à un second seuil, ramener l'affichage de l'élément graphique ($C_1(t)$) à sa position initiale ($C_{1\_0}$) autour du point d'ancrage ($B_{1\_0}$).

9. Interface tactile (1) selon la revendication 7, configurée pour afficher sur l'écran tactile (6) au moins un premier élément graphique ($C_{1\_0}$) associé à une première zone de sélection tactile, à un premier point d'ancrage ($B_{1\_0}$), à une première fonction de premier seuil de distance et pour afficher au moins un second élément graphique ($C_{2\_0}$) associé à une seconde zone de sélection tactile, à un second point d'ancrage ($B_{2\_0}$) et à une seconde fonction de premier seuil de distance, la première et la seconde fonction de premier seuil de distance définissant autour du premier ($B_{1\_0}$) et du second ($B_{2\_0}$) points d'ancrages, respectivement une première frontière d'un premier domaine d'influence et une seconde frontière d'un second domaine d'influence, l'interface étant configurée pour autoriser, au moins par moments, une sélection par contact du doigt (11) en un point de contact se trouvant dans la première zone de sélection tactile, alors que la première zone de sélection tactile chevauche temporairement le second domaine d'influence et que le point de contact se trouve dans le second domaine d'influence.

10. Procédé de gestion d'une interface tactile (1) apte à détecter l'approche et la position d'un doigt (11) d'un utilisateur par rapport à un écran d'affichage (6) de l'interface, dans lequel l'interface tactile (1)

   - affiche lors d'une première étape sur l'écran d'affichage (6) au moins un élément graphique ($C_{1\_0}$) associé à une zone de sélection tactile, entourant un point d'ancrage ($B_{1\_0}$) de l'élément graphique ($C_{1\_0}$) sur l'écran d'affichage (6), et se trouvant à l'intérieur d'une même zone d'influence, l'écran d'affichage (6) étant délimité au moyen de frontières (10, F1_4, F1_2, F4_i, F2_i, F2_3, Fi_j) en zones d'influence (R1, R2, R3, R4, Ri et Rj) ;
   - -estime de manière répétée une trajectoire (traj(t)) d'un point ($D_{xyz}(t)$) du doigt (11) et un point d'impact ($P_{xy}(t)$) de cette trajectoire (traj(t)) sur l'écran d'affichage (6),
   - quand le point d'impact ($P_{xy}(t)$) entre dans la zone d'influence et quand une distance ($Ecart_1(t)$) entre le point d'ancrage ($B_{1\_0}$) et le point d'impact ($P_{xy}(t)$) devient inférieure à un premier seuil, déplace l'élément graphique affiché ($C_1(t)$) et la zone de sélection tactile associée en direction du point d'impact ($P_{xy}(t)$) ;
   - tant que le point d'impact ($P_{xy}(t)$) reste dans la zone d'influence, affiche l'élément graphique ($C_1(t)$) et la zone de sélection tactile associée, en une position qui est fonction du point d'impact actualisé ($P_{xy}^{(t+dt)}$) et qui est d'autant plus proche du point d'impact que le doigt (11) s'approche de l'écran affichaêe (6).

**Patentansprüche**

1. Berührungsschnittstelle (1) aufweisend einen Anzeigebildschirm (6), wobei die Berührungsschnittstelle (1) geeignet ist, die Annäherung und die Position eines Fingers (11) eines Benutzers im Verhältnis zum Anzeigebildschirm zu detektieren, wobei die Berührungsschnittstelle dazu ausgebildet ist, auf dem Anzeigebildschirm (6) wenigstens ein Grafikelement (8, $C_{1\_0}$, $C_{2\_0}$, $C_{3\_0}$, $C_{4\_0}$, $C_{i\_0}$, $Cj_{1\_0}$) anzuzeigen, das einem Berührungsauswahlbereich zugeordnet ist, der einen Ankerpunkt (9, $B_{1\_0}$, $B2_{1\_0}$, $B_{3\_0}$, $B_{4\_0}$, $B_{i\_0}$, $Bj_{1\_0}$) des Grafikelements auf dem Anzeigebildschirm umgibt und sich innerhalb eines selben Einflussbereichs (R1, R2, R3, R4, Ri und Rj) befindet, wobei der Berührungsbildschirm (6) mittels Begrenzungen (10, F1_4, F1_2, F4_i, F2_i, F2_3, Fi_j) in Einflussbereiche (R1, R2, R3, R4, Ri und Rj) unterteilt ist, **dadurch gekennzeichnet, dass** die Berührungsschnittstelle (1) dazu ausgebildet ist, wiederholt eine Bewegungsbahn (traj(t)) eines Punkts ($D_{xyz}(t)$) des Fingers (11) und einen Auftreffpunkt ($P_{xy}(t)$) dieser Bewegungsbahn auf dem Anzeigebildschirm (6) zu schätzen, und dazu ausgebildet ist, wenn der Auftreffpunkt ($P_{xy}(t)$) in den Einflussbereich eintritt und wenn eine Distanz ($Abstand_1(t)$) zwischen dem Ankerpunkt ($B_{1\_0}$) und dem Auftreffpunkt ($P_{xy}(t)$) eine erste Schwelle unterschreitet, das angezeigte Grafikelement ($C_1(t)$) und den zugeordneten Berührungsauswahlbereich in Richtung des Auftreffpunkts ($P_{xy}(t)$) zu bewegen, und dazu ausgebildet ist, solange der Auftreffpunkt ($P_{xy}(t)$) im Einflussbereich (R1, R2, R3, R4, Ri und Rj) bleibt, das Grafikelement ($C_1(t)$) und den zugeordneten Berührungsauswahlbereich in einer Position anzuzeigen, die vom aktualisierten Auftreffpunkt ($P_{xy}(t+dt)$) abhängig ist und sich umso näher am Auftreffpunkt befindet, je weiter sich der Finger (11) an den Anzeigebildschirm (6) annähert.

2. Berührungsschnittstelle nach Anspruch 1, die dazu ausgebildet ist, beim Überschreiten der ersten Schwelle einen Translationsvektor ($U_1(t)$) vom Ankerpunkt ($B_{1\_0}$) zu einem temporären Zentrierungspunkt ($B_1(t)$) zu berechnen und eine entsprechende Translation der Anzeige ($C_1(t)$) des Grafikelements durchzuführen.

3. Berührungsschnittstelle nach Anspruch 2, wobei die erste Distanzschwelle eine variable Funktion einer Winkelposition des Auftreffpunkts ($P_{xy}(t)$) um den Ankerpunkt ($B_{1\_0}$) ist.

4. Berührungsschnittstelle nach einem der Ansprüche 2 oder 3, die dazu ausgebildet ist, die Position des temporären Zentrierungspunkts ($B_1(t)$) als ein Baryzentrum zwischen dem ursprünglichen Ankerpunkt ($B_{1\_0}$) und dem Auftreffpunkt ($P_{xy}(t)$) zu berechnen, wobei die relative Distanz zwischen dem Zentrierungspunkt und dem Auftreffpunkt eine ($P_{xy}(t)$) eine ansteigende Funktion der Distanz zwischen dem Finger und dem Anzeigebildschirm ist.

5. Berührungsschnittstelle nach einem der Ansprüche 2 bis 4, die dazu ausgebildet ist, beim Überschreiten der ersten Schwelle das verschobene Grafikelement ($C_1(t)$) durch Ausdehnung dieses Grafikelements in wenigstens einer Richtung gemäß einem Vergrößerungsfaktor anzuzeigen.

6. Berührungsschnittstelle nach einem der Ansprüche 2 bis 5, die dazu ausgebildet ist, beim Überschreiten der ersten Schwelle das verschobene Grafikelement ($C_1(t)$) an der neuen Position anzuzeigen, die der Überschreitung der Schwelle entspricht, dann, wenn die Distanz zwischen dem Ankerpunkt und dem Auftreffpunkt die erste Schwelle unterschreitet, periodisch einen neuen Translationsvektor ($U_1(t)$) zu berechnen, wobei jedes Mal ein aktualisierter Auftreffpunkt ($P_{xy}(t)$) berücksichtigt wird, und das Grafikelement ($C_1(t)$) anzuzeigen, das um den entsprechenden Vektor ($U_1(t)$) verschoben wurde.

7. Berührungsschnittstelle nach einem der vorhergehenden Ansprüche, die dazu ausgebildet ist, den Berührungsauswahlbereich mit dem angezeigten Grafikelement ($C_1(t)$) zu bewegen.

8. Berührungsschnittstelle nach einem der vorhergehenden Ansprüche, die dazu ausgebildet ist, wenn die Distanz (Abstand$_1$(t)) zwischen dem Ankerpunkt ($B_{1\_0}$) und dem Auftreffpunkt ($P_{xy}(t)$) eine zweite Schwelle überschreitet, die Anzeige des Grafikelements ($C_1(t)$) in ihre Ausgangsposition ($C_{1\_0}$) um den Ankerpunkt ($B_{1\_0}$) zurückzubringen.

9. Berührungsschnittstelle (1) nach Anspruch 7, die dazu ausgebildet ist, auf dem Berührungsbildschirm (6) wenigstens ein erstes Grafikelement ($C_{1\_0}$) anzuzeigen, das einem ersten Berührungsauswahlbereich, einem ersten Ankerpunkt ($B_{1\_0}$), einer ersten Funktion einer ersten Distanzschwelle zugeordnet ist, und wenigstens ein zweites Grafikelement ($C_{2\_0}$) anzuzeigen, das einem zweiten Berührungsauswahlbereich, einem zweiten Ankerpunkt ($B_{2\_0}$) und einer zweiten Funktion einer ersten Distanzschwelle zugeordnet ist, wobei die erste und zweite Funktion einer ersten Distanzschwelle um den ersten ($B_{1\_0}$) und zweiten ($B_{2\_0}$) Ankerpunkt eine erste Begrenzung eines ersten Einflussgebiets beziehungsweise eine zweite Begrenzung eines zweiten Einflussgebiets definieren, wobei die Schnittstelle dazu ausgebildet ist, wenigstens zeitweise eine Auswahl durch Kontakt des Fingers (11) an einem Kontaktpunkt zu erlauben, der sich im ersten Berührungsauswahlbereich befindet, während der erste Berührungsauswahlbereich vorübergehend den zweiten Berührungsauswahlbereich überlagert und sich der Kontaktpunkt im zweiten Einflussgebiet befindet.

10. Verfahren zur Verwaltung einer Berührungsschnittstelle (1), die geeignet ist, die Annäherung und die Position eines Fingers (11) eines Benutzers im Verhältnis einem Anzeigebildschirm (6) der Schnittstelle zu detektieren, wobei die Berührungsschnittstelle (1)

   - bei einem ersten Schritt auf dem Anzeigebildschirm (6) wenigstens ein Grafikelement ($C_{1\_0}$) anzeigt, das einem Berührungsauswahlbereich zugeordnet ist, der einen Ankerpunkt ($B_{1\_0}$) des Grafikelements ($C_{1\_0}$) auf dem Anzeigebildschirm (6) umgibt und sich innerhalb eines selben Einflussbereichs befindet, wobei der Anzeigebildschirm (6) mittels Begrenzungen (10, F1_4, F1_2, F4_i, F2_i, F2_3, Fi_j) in Einflussbereiche (R1, R2, R3, R4, Ri et Rj) unterteilt ist;
   - wiederholt eine Bewegungsbahn (traj (t)) eines Punkts ($D_{xyz}(t)$) des Fingers (11) und einen Auftreffpunkt ($P_{xy}(t)$) dieser Bewegungsbahn (traj(t)) auf dem Anzeigebildschirm (6) schätzt,
   - wenn der Auftreffpunkt ($P_{xy}(t)$) in den Einflussbereich eintritt und wenn eine Distanz (Abstand$_1$(t)) zwischen dem Ankerpunkt ($B_{1\_0}$) und dem Auftreffpunkt ($P_{xy}(t)$) eine erste Schwelle unterschreitet, das angezeigte Grafikelement ($C_1(t)$) und den zugeordneten Berührungsauswahlbereich in Richtung des Auftreffpunkts ($P_{xy}(t)$) bewegt;
   - solange der Auftreffpunkt ($P_{xy}(t)$) im Einflussbereich bleibt, das Grafikelement ($C_1(t)$) und den zugeordneten Berührungsauswahlbereich in einer Position anzeigt, die vom aktualisierten Auftreffpunkt ($P_{xy}(t+dt)$) abhängig ist und sich umso näher am Auftreffpunkt befindet, je weiter sich der Finger (11) an den Anzeigebildschirm (6) annähert.

**Claims**

1. Touch interface (1) comprising a display screen (6), the touch interface (1) being capable of detecting the approach and the position of a user's finger (11) with respect to the display screen, the touch interface being configured to display, on the display screen (6), at least one graphical element (8, $C_{1\_0}$, $C_{2\_0}$, $C_{3\_0}$, $C_{4\_0}$, $C_{i\_0}$, $Cj_{1\_0}$) associated with a touch-selection zone, surrounding an anchoring point (9, $B_{1\_0}$, $B2_{1\_0}$, $B_{3\_0}$, $B_{4\_0}$, $B_{i\_0}$, $Bj_{1\_0}$) of the graphical element on the display screen, and located inside the same zone of influence (R1, R2, R3, R4, Ri and Rj), the touch screen (6) being delimited by means of boundaries (10, F1_4, F1_2, F4_i, F2_i, F2_3, Fi_j) into zones of influence (R1, R2, R3, R4, Ri and Rj), **characterized in that** the touch interface (1) is configured to repeatedly estimate a trajectory (traj (t)) of a point ($D_{xyz}(t)$) of the finger (11) and an impact point ($P_{xy}(t)$) of this trajectory on the display screen (6), and is configured to, when the impact point ($P_{xy}(t)$) enters the zone of influence and when a distance ($Gap_1(t)$) between the anchoring point ($B_{1\_0}$) and the impact point ($P_{xy}(t)$) falls below a first threshold, move the displayed graphical element ($C_1(t)$) and the associated touch-selection zone in the direction of the impact point ($P_{xy}(t)$), and is configured to, as long as the impact point ($P_{xy}(t)$) remains in the zone of influence (R1, R2, R3, R4, Ri and Rj), display the graphical element ($C_1(t)$) and the associated touch-selection zone at a position which is a function of the updated impact point ($P_{xy}(t+dt)$) and which becomes closer to the impact point as the finger (11) approaches the display screen (6).

2. Touch interface according to Claim 1, configured to, when the first threshold is crossed, calculate a translation vector ($U_1(t)$) for translating the anchoring point ($B_{1\_0}$) to a temporary centring point ($B_1(t)$), and for performing a corresponding translation of the display ($C_1(t)$) of the graphical element.

3. Touch interface according to Claim 2, wherein the first distance threshold is a variable function of an angular position of the impact point ($P_{xy}(t)$) around the anchoring point ($B_{1\_0}$).

4. Touch interface according to one of Claims 2 and 3, configured to calculate the position of the temporary centring point ($B_1(t)$) as a barycentre between the anchoring point ($B_{1\_0}$) and the impact point ($P_{xy}(t)$), the relative distance between the centring point and the impact point ($P_{xy}(t)$) being an increasing function of the distance between the finger and the display screen.

5. Touch interface according to one of Claims 2 to 4, configured to, when the first threshold is crossed, display the translated graphical element ($C_1(t)$) by dilating this graphical element, along at least one direction, according to an enlargement factor.

6. Touch interface according to any one of Claims 2 to 5, configured to, when the first threshold is crossed, display the translated graphical element ($C_1(t)$) at the new position corresponding to the crossing of the threshold, then, when the distance between the anchoring point and the impact point falls below the first threshold, periodically calculating a new translation vector ($U_1(t)$) each time taking into account an updated impact point ($P_{xy}(t)$), and for displaying the translated graphical element ($C_1(t)$) of the corresponding vector ($U_1(t)$).

7. Touch interface according to any one of the preceding claims, configured to move, with the displayed graphical element ($C_1(t)$), the touch-selection zone.

8. Touch interface according to any one of the preceding claims, configured to, when the distance ($Gap_1(t)$) between the anchoring point ($B_{1\_0}$) and the impact point ($P_{xy}(t)$) rises above a second threshold, bring back the display of the graphical element ($C_1(t)$) to its initial position ($C_{1\_0}$) around the anchoring point ($B_{1\_0}$).

9. Touch interface (1) according to Claim 7, configured to display, on the touch screen (6), at least one first graphical element ($C_{1\_0}$) associated with a first touch-selection zone, with a first anchoring point ($B_{1\_0}$) and with a first first distance threshold function, and for displaying at least one second graphical element ($C_{2\_0}$) associated with a second touch-selection zone, with a second anchoring point ($B_{2\_0}$) and with a second first distance threshold function, the first and second first distance threshold functions defining, around the first ($B_{1\_0}$) and the second ($B_{2\_0}$) anchoring points, respectively, a first boundary of a first field of influence and a second boundary of a second field of influence, the interface being configured to allow, at least at times, selection by contact of the finger (11) at a contact point located in the first touch-selection zone, while the first touch-selection zone temporarily overlaps the second field of influence and the contact point is located in the second field of influence.

10. Method for managing a touch interface (1) which is capable of detecting the approach and the position of a user's finger (11) with respect to a display screen (6) of the interface, wherein the touch interface (1)

- in a first step displays, on the display screen (6), at least one graphical element ($C_{1\_0}$) associated with a touch-selection zone, surrounding an anchoring point ($B_{1\_0}$) of the graphical element ($C_{1\_0}$) on the display screen (6), and located inside the same zone of influence, the display screen (6) being delimited, by means of boundaries (10, F1_4, F1_2, F4_i, F2_i, F2_3, Fi_j) into zones of influence (R1, R2, R3, R4, Ri and Rj);
- repeatedly estimates a trajectory (traj(t)) of a point ($D_{xyz}(t)$) of the finger (11) and an impact point ($P_{xy}(t)$) of this trajectory (traj (t)) on the display screen (6),
- when the impact point ($P_{xy}(t)$) enters the zone of influence and when a distance ($Gap_1(t)$) between the anchoring point ($B_{1\_0}$) and the impact point ($P_{xy}(t)$) falls below a first threshold, moves the displayed graphical element ($C_1(t)$) and the associated touch-selection zone in the direction of the impact point ($P_{xy}(t)$);
- as long as the impact point ($P_{xy}(t)$) remains in the zone of influence, displays the graphical element ($C_1(t)$) and the associated touch-selection zone at a position which is a function of the updated impact point ($P_{xy}(t+dt)$) and which becomes closer to the impact point as the finger (11) approaches the display screen (6).

# FIG.1

EP 3 221 781 B1

FIG.2

EP 3 221 781 B1

# FIG.3

**EP 3 221 781 B1**

## RÉFÉRENCES CITÉES DANS LA DESCRIPTION

**Documents brevets cités dans la description**

- US 2009201246 A1
- US 20111285665 A1
- US 2012120002 A1
- EP 2105826 A2
- US 2014028557 A1
- US 2011157040 A1